Europäisches Patentamt

European Patent Office

Office européen des brevets

(19)

(11) Veröffentlichungsnummer: **0 250 606 B1**

# (12) EUROPÄISCHE PATENTSCHRIFT

(45) Veröffentlichungstag der Patentschrift:
16.01.91 Patentblatt 91/03

(51) Int. Cl.⁵: **E02D 31/00**, B09B 1/00,
E21D 23/00

(21) Anmeldenummer: 86107198.3

(22) Anmeldetag: 27.05.86

(54) **Verfahren und Vorrichtung zum nachträglichen Einbau von Bauelementen auf einer ausgedehnten Sohle im Erdboden im Untertagebau.**

(43) Veröffentlichungstag der Anmeldung:
07.01.88 Patentblatt 88/01

(45) Bekanntmachung des Hinweises auf die
Patenterteilung:
16.01.91 Patentblatt 91/03

(84) Benannte Vertragsstaaten:
AT BE CH DE FR GB IT LI NL

(56) Entgegenhaltungen:
EP-A- 0 214 359
DE-A- 3 024 500
DE-A- 3 031 113
GB-A- 1 521 970
WO 86/07107

(73) Patentinhaber: **Dyckerhoff & Widmann
Aktiengesellschaft
Erdinger Landstrasse 1
D-8000 München 81 (DE)**

(72) Erfinder: **Die Erfinder haben auf ihre Nennung
verzichtet**

(74) Vertreter: **Lehn, Werner, Dipl.-Ing. et al
Hoffmann, Eitle & Partner Patentanwälte
Arabellastrasse 4
D-8000 München 81 (DE)**

**Beschreibung**

Die Erfindung betrifft ein Verfahren zum nachträglichen Einbau von Bauelementen auf einer ausgedehnten Sohle im Erdboden im Untertagebau, bei dem eine Schutzeinrichtung schrittweise durch den Erdboden bewegt wird und die Schutzeinrichtung im Erdboden einen fortschreitenden Arbeitsraum bildet, von dem aus die Bauelemente sukzessive eingebaut werden.

Des weiteren bezieht sich die Erfindung auf eine Vorrichtung zur Durchführung dieses Verfahrens.

Es wurde gerade in letzter Zeit vermehrt festgestellt, daß bestehende großflächige Mülldeponien häufig nicht oder nicht ausreichend dagegen gesichert sind, daß aus der Mülldeponie stammende schädliche Stoffe in den sich unter der Mülldeponie befindlichen Erdboden und von dort in das Grundwasser gelangen. Die Erfindung beschäftigt sich vorzugsweise mit der Lösung dieses Problems ; sie bezieht sich aber ganz allgemein auf die Aufgabenstellung, Bauelemente auf einer ausgedehnten, d.h. großflächigen Sohle bzw. Schicht, im Erdboden im Untertagbau einzubauen.

Ein aus der DE-A-34 09 591 bekanntes Verfahren zur nachträglichen Herstellung einer unterirdischen Dichtungssohle im Erdboden unter einer auf diesem gelagerten Mülldeponie besteht im wesentlichen darin, daß von einer Seite der Mülldeponie ausgehend eine Anzahl sich unter der Mülldeponie im wesentlichen waagrecht und parallel zueinander hindurcherstreckende Erdstreifen aus dem Erdboden, ggf. unter Abstützung des darüber befindlichen Erdreichs herausgefördert und dadurch erhaltene, Röhren bildende Hohlräume im Erdboden mit einem im wesentlichen flüssigkeitsdichten Füllmaterial gefüllt werden. Diese mit flüssigkeitsdichtem Füllmaterial gefüllten Hohlräumen liegen dabei entweder dicht aneinander oder aber im Abstand, wobei im letzteren Fall die zwischen den gefüllten Hohlräumen verbliebenen Erdschichten von den Hohlräumen aus durch Initiieren von Dichtungsmassen im wesentlichen flüssigkeitsundurchlässig abgedichtet werden. Dieses Verfahren ist auf das Verarbeiten eines zunächst pumpfähigen Dichtungsmittels beschränkt.

Die DE-A-34 24 981 offenbart ein Verfahren zum Abdichten von Sohlen ausgedehnter Deponien gegenüber dem Grundwasser. Dazu wird die jeweilige Deponie zuerst mit Umfassungswänden umgeben, deren Tiefe bis mindestens zum Niveau der herzustellenden Abdichtung reicht. Danach wird zwischen den Umfassungswänden unterhalb der Deponie im gewachsenen Boden im Bereich ihrer Sohle wenigstens ein horizontaler oder leicht geneigter Schlitz bergmännisch aufgefahren und mit Dichtungsmittel enthaltendem Material verfüllt, das einen zusammenhängenden Dichtungsteppich bildet. Auch dieses Verfahren ist auf ein unter Druck förderbares Dichtmittel beschränkt. Des weiteren sind Versorgungsstollen notwendig, über die nicht nur das Dichtungsmaterial, sondern auch die benötigten Vorrichtungen an die fortschreitende Einbaustelle herangeführt werden müssen. Dabei sind nicht nur die genannten Versorgungsstollen kostenaufwendig, sondern es ergeben sich des weiteren lange Untertageversorgungswege, die die Bauzeit erhöhen und sich deshalb ebenfalls ungünstig in bezug auf die Kosten auswirken.

Aufgabe der Erfindung ist es, ein Verfahren der eingangs genannten Art anzugeben und eine Vorrichung zur Durchführung dieses Verfahrens zu schaffen, die es ermöglichen, daß beliebige Bauelemente, d.h. Dichtungssysteme je nach den technischen Gegebenheiten, Bewehrungssysteme, Fertigbetonbauteile, auch für begehbare Konstruktionen, oder dgl. nachträglich auf eine ausgedehnte Sohle im Erdboden eingebaut werden können, ohne daß sich zu lange Versorgungswege ergeben und ohne daß im Arbeitsraum der Schutzeinrichtung bereits von Hause aus die für die gesamte Strecke benötigten Bauelemente und Geräte mittransportiert werden müssen.

Diese Aufgabe wird bei einem Verfahren der eingangs vorausgesetzten Art dadurch gelöst, daß als Schutzeinrichtung Schreitausbaueinheiten verwendet werden, die an ihrer in Fortschreitrichtung rückwärtigen Seite zwischen zwei quer zur Fortschreitrichtung und parallel zueinander verlaufenden Reihen von Stützen einen freien, tunnelartigen Arbeits- und Transportraum ausbilden, der sich quer zur Fortschreitrichtung im wesentlichen über die gesamte Längsausdehnung der Schreitansbaneinheiten erstreckt, und von mindestens einen Ende herzugänglich ist.

Durch die erfindungsgemäße Maßnahme, wonach sich der tunnelartige Arbeitsraum quer zur Fortschreitrichtung über die gesamte Schutzeinrichtung erstreckt und dieser Arbeitsraum begehbar, u.U. auch befahrbar ausgebildet ist, können die Bauelemente, wie Rohre, Dichtungsfolien, Fertigbetonbauteile oder dergleichen über die gesamte Erstreckung des Arbeitsraums quer zur Fortschreitrichtung der Schutzeinrichtung verlegt werden und dabei auch in einfacher Weise die entsprechenden Kontrollen in bezug auf die Dichtheit der Verbindungen der Rohre, Dichtfolien etc. durchgeführt werden. Bei z.B. der Verlegung von Dichtungsfolien quer zur Fortschreitrichtung der Schutzeinrichtung können die Folienverbindungen in Form einer üblichen Doppelnaht durch Aufblasen auf die ganze Länge kontrolliert werden. Dies ist bei einer Verlegung von Dichtungsfolien parallel zur Fortschreitrichtung der Schutzeinrichtung nicht möglich.

Durch die weitere erfindungsgemäße Maßnahme, daß der tunnelartige Arbeitsraum in bezug auf mindestens eines seiner Ende stets zugänglich ist, können über dieses zugängliche Ende die für jeden Arbeitstakt erforderlichen Materialen, die oberirdisch gelagert sind, nach dem erforderlichen Bedarf auf kurzem Transportweg in den unterirdischen Arbeitsraum eingebracht und dort verarbeitet werden. Der Arbeitsraum ist also nicht beengt durch mitzuführende Bauelemente und Vorrichtungen. Auf diese Weise kann das gesamte Volumen des Arbeitsraums für die auszuführenden Arbeiten genutzt werden, so daß diese Arbeiten rationell und unter guten Bedingungen für die Arbeiter durchgeführt werden können.

Des weiteren ermöglicht der freie Arbeitsraum nach dem erfindungsgemäßen Verfahren die Schaffung eines genau einnivellierbaren Planums für das meist erforderliche Quergefälle bei Drainagen.

Die Schutzeinrichtung und damit der quer über deren gesamte Breite verlaufende tunnelartige Arbeitsraum können sich über die ganze Breite des Unterfahrungshorizonts, d.h. z.B. die ganze Breite der Mülldeponie, erstrecken. In diesem Fall können sich beide Ende des Arbeitsraums in das Freie öffnen, so daß der Arbeitsraum von seinen beiden Enden her von der Erdoberfläche aus begangen und beschickt werden kann.

Es ist besonders bevorzugt, daß sich die Breite der Schutzeinrichtung in etwa über die Hälfte der Breite des Unterfahrungshorizonts erstreckt. In diesem Fall ist das zur Seite des Unterfahrungshorizonts liegende Ende des Arbeitsraums zum Freien hin geöffnet. In diesem Fall wird zuerst die eine Hälfte des Unterfahrungshorizonts bestrichen und danach die andere Hälfte.

Es ist aber auch denkbar und in manchen Fällen, z.B. bei besonders breiten Mülldeponien, von Vorteil, wenn die Breite der Schutzeinrichtung und damit die Länge des sich quer zur Fortschreitrichtung erstreckenden Arbeitsraums kleiner sind als die Hälfte der Breite des Unterfahrungshorizonts. In diesem Fall steht das innen liegende Ende des Arbeitsraums mit einem Stollen in Verbindung, der parallel zur Fortschreitrichtung der Schutzeinrichtung verläuft und entlang dem sich die Schutzeinrichtung bewegt. Im ersten Befahrungsabschnitt liegt in diesem Fall das äußere Ende des Arbeitsraums am Rande des Befahrungshorizonts und damit oberhalb des Erdbodens. Beim Befahren des auf der anderen Seite des Stollen verlaufenden Abschnittes des Unterfahrungshorizonts, d.h. der Mülldeponie, bewegt sich das entsprechende Ende des Arbeitsraums entlang diesem Stollen und ist von diesem Stollen aus durch geeignete Öffnungen jederzeit zugänglich.

Bei entsprechender Breite des Unterfahrungshorizonts müssen dann für den nächsten Bearbeitungsabschnitt an beiden Enden des Arbeitsraums entsprechende Stollen gezogen werden.

Aus Kosten- und Fertigungsgründen ist es dabei zweckmäßig, daß der jeweilige Stollen im Zuge des Fortschreitens der Schutzeinrichtung in dessen Schutz hergestellt wird, vorzugsweise aus Fertigelementen.

Eine Weiterbildung des erfindungsgemäßen Verfahrens besteht darin, daß in Fortschreitrichtung vor der Schutzeinrichtung der Erdboden gelöst wird und zumindest ein Teil dieses Materials durch den Arbeitsraum in das Freie abtransportiert wird. Das abgezogene Material kann bei entsprechender Tauglichkeit wieder verwertet werden, z.B. einem Dichtmittel als Füllstoff zugegeben werden. Der verbleibende Teil des Materials wird hinter der Schutzeinrichtung wieder verfüllt und danach verdichtet, so daß zur Füllung des erzeugten Hohlraums kein oder nicht in großer Menge zusätzliches Material verarbeitet werden muß.

Bei der Ausgestaltung der erfindungsgemäßen Vorrichtung kann mit Vorteil auf Bauelemente aus dem Kohlebergbau zurückgegriffen werden, die natürlich an den erfindungsgemäßen Zweck angepaßt werden müssen.

Danach kann die erfindungsgemäße Vorrichtung mehrere vordere und hintere Schreitausbaueinheiten umfassen, deren Aufbau an sich bekannt ist. Die vorderen und hinteren Schreitausbaueinheiten sind jeweils quer zur Fortschreitrichtung angeordnet und untereinander entsprechend verbunden. In diesen Schreitausbaueinheiten, bevorzugt hinter den Fußplatten der Schreitausbaueinheiten, ist der quer zur Fortschreitrichtung verlaufende, tunnelartige freie Arbeitsraum ausgebildet, der einen im wesentlichen über die gesamte Breite der Schreitausbaueinheiten verlaufenden Sohlenabschnitt zum Einbau der Bauelemente freiläßt. Auf diesen Sohlenabschnitt können auf diese Weise quer zur Fortschreitrichtung sukzessive die Bauelemente, z.B. die Dichtungsfolienbahnen verlegt werden. Diese Verlegungsweise läßt eine Kontrolle der Dichtheit der Bauelemente an ihren Verbindungsstellen nach an sich üblichen Verfahrensmethoden zu.

Während die vorderen Schreitausbaueinheiten Vorrichtungen zum Lösen und Transport von Erdbodenmaterial in den Arbeitsraum umfassen, sind die hinteren Schreitausbaueinheiten mit Vorrichtungen zum Verfüllen und Verdichten von Material hinter den hinteren Schreitausbaueinheiten versehen. Des weiteren ist eine Fördereinrichtung vorgesehen, die quer zur Fortschreiteinrichtung verläuft und mit dem Gut von dem zugänglichen Ende des tunnelartigen Arbeitsraum in diesen hinein oder aus diesem heraus transportiert werden kann.

Ein bevorzugtes Ausführungsbeispiel der erfindungsgemäßen Vorrichtung wird im folgenden anhand der Zeichnungen beschrieben. Es zeigt :

Fig. 1 einen Vertikalschnitt durch die Vorrichtung parallel zur Fortschreitrichtung und

Fig. 2 einen Horizontalschnitt durch die Vorrichtung nach Fig. 1 gemäß der Schnittlinie II-II.

Die Vorrichtung umfaßt im wesentlichen eine Reihe von vorderen Schreitausbaueinheiten (10), die quer zur Fortschreitrichtung (A) nebeneinander angeordnet sind. Jede der vorderen Schreitausbaueinheiten (10) umfaßt beispielsweise eine Fußplatte (11), auf der mittels Stützen (12) sowie mittels Hydraulikzylinder (13) ein Deckenschild (14) abgestützt ist. An der Frontseite weist jede Schreitausbaueinheit (10) ein Stützschild oder mehrere Stützschilder (15) auf, das bzw. die in bekannter und deshalb nicht dargestellter Weise beweglich ist bzw. sind.

Ferner umfaßt die Vorrichtung hintere Schreitausbaueinheiten (20), von denen ebenfalls mehrere nebeneinander quer zur Fortschreitrichtung (A) angeordnet und die hinter den entsprechenden vorderen Schreitausbaueinheiten (10) liegen und mit diesen verbunden sind. Jede der hinteren Schreitausbaueinheiten (20) besteht im wesentlichen aus zwei Fußplatten (21a, 21b). Auf der vorderen Fußplatte (21a) stützt sich über Stützen (26) das vordere Ende eines Deckenschilds (23) ab, das mit seinem hinteren Ende auf Stützen (22) auflagert, die auf der hinteren Fußplatte (21b) angeordnet sind. An dem in Fortschreitrichtung (A) hinterem Ende jeder hinteren Schreitausbaueinheit (20) sind Stütz- und Verdichtschilde (24) angeordnet, die über Hydraulikzylinder (25) beweglich sind.

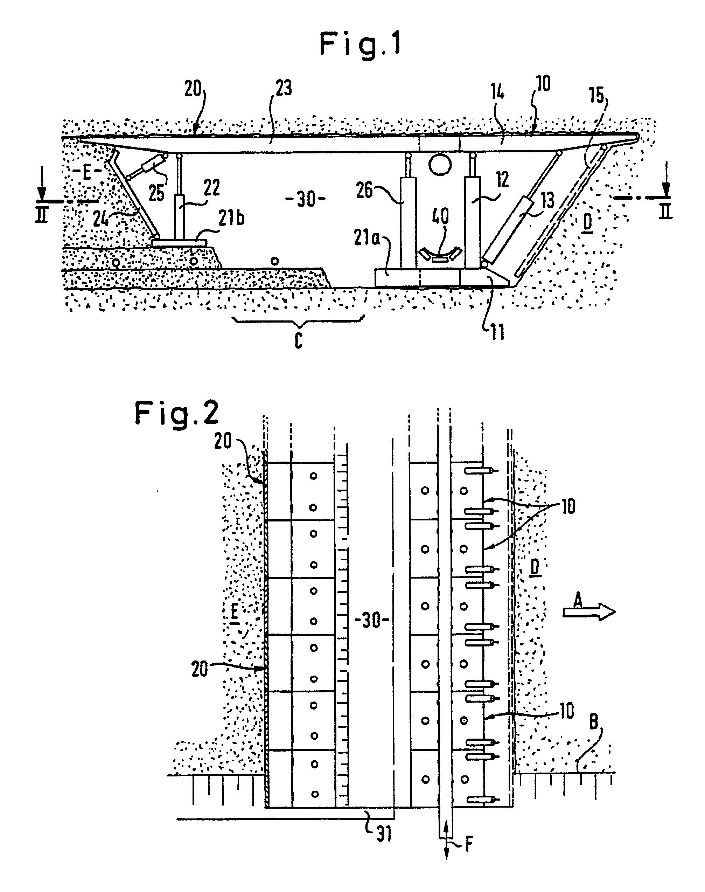

Die Schildkette aus den vorderen Schreitausbaueinheiten (10) und den hinteren Schreitausbaueinheiten (20) bildet einen freien Arbeits- und Transportraum (30), der sich tunnelartig quer zur Fortschreitrichtung (A) der Vorrichtung im wesentlichen über die gesamte Breite der Schildkette erstreckt. Zur Aufnahme des Arbeitsraums (30) sind bevorzugt die hinteren Schreitausbaueinheiten (20) entsprechend ausgebildet, während die vorderen (10) konventionell sein können. Zumindest ein Ende des tunnelartigen Arbeitsraums (30) endet, wie in Fig. 2 bei (31) angedeutet, oberirdisch in bezug auf den mit (B) bezeichneten Unterfahrungshorizonts, d.h. z.B. seitlich des Deponierands. Von diesem Ende her kann der Arbeitsraum (30) jederzeit mit den erforderlichen Bauelementie, Geräten etc. beschickt werden, wie dies schon beschrieben worden ist. Der tunnelartige Arbeitsraum (30) läßt einen im wesentlichen über die gesamte Breite der Schildkette verlaufenden Sohlenabschnitt (C) frei, auf den einer quer zur Fortschreitrichtung (A) verlaufenden Verlegerichtung die Bauelemente, z.B. Drainagerohre, Dichtungsfolien, Fertigbetonbauteile etc. eingebracht werden können. Aufgrund dieser Verlegeart bzw. Einbauart können, wie schon geschildert, die Dichtungsstöße über die gesamte Breite der Schildkette kontrolliert werden.

In der Vorrichtung ist des weiteren eine Querfördereinrichtung (40) vorgesehen, mit der Material quer zur Fortschreitrichtung (A) der Vorrichtung aus dieser herausgebracht bzw. in diese hineingebracht werden kann, wie durch den Pfeil (F) angedeutet.

Zur Fortbewegung der Schildkette in Fortschreitrichtung (A) wird das vor dem vorderen Ende der vorderen Schreitausbaueinheiten (10) liegende Material im Bereich (D) gelöst und in die Vorrichtung eingebracht ; dieses Material kann z.T. mittels der Querfördereinrichtung (40) aus der Vorrichtung ausgetragen werden. Der verbleibende Teil des Materials kann auch am hinteren Ende der hinteren Schreitausbaueinheiten (20) im Bereich (E) verfüllt und verdichtet werden.

Die Fortschreitbewegung der Schreitausbaueinheiten erfolgt in an sich bekannter und deshalb nicht näher zu beschreibender Weise.

## Ansprüche

1. Verfahren zum nachträglichen Einbau von Bauelementen auf einer ausgedehnten Sohle im Erdboden im Untertagebau, bei dem eine Schutzeinrichtung schrittweise durch den Erdboden bewegt wird und die Schutzeinrichtung im Erdboden einen fortschreitenden Arbeitsraum bildet, von dem aus die Bauelemente sukzessive eingebaut werden, dadurch gekennzeichnet, daß als Schutzeinrichtung Schreitausbaueinheiten verwendet werden, die an ihrer in Fortschreitrichtung rückwärtigen Seite zwischen zwei quer zur Fortschreitrichtung und parallel zueinander verlaufenden Reihen von Stützen einen freien, tunnelartigen Arbeits- und Transportraum ausbilden, der sich quer zur Fortschreitrichtung im wesentlichen über die gesamte Längsausdehnung der Schreitausbaueinheiten erstreckt und von mindestens einem Ende her stets zugänglich ist.

2. Verfahren nach Anspruch 1, dadurch gekennzeichnet, daß die Abmessungen des Arbeits- und Transportraumes den Einbau der Bauelemente mit gängigen Bauverfahren zulassen.

3. Verfahren nach Anspruch 1 oder 2, dadurch gekennzeichnet, daß ein zugängliches Ende des Arbeitsraums oberhalb des Erdbodens oder in einem offenen Graben liegt.

4. Verfahren nach einem der vorhergehenden Ansprüche, dadurch gekennzeichnet, daß ein zugängliches Ende des Arbeitsraums mit einem Stollen in Verbindung steht, der parallel zur Fortschreitrichtung der Schutzeinrichtung verläuft und entlang dem sich die Schutzeinrichtung bewegt.

5. Verfahren nach Anspruch 4, dadurch gekennzeichnet, daß der Stollen im Zuge des Fortschreitens und im Bereich der Schutzeinrichtung hergestellt wird, vorzugsweise aus Fertigelementen.

6. Verfahren nach einem der Ansprüche 1 bis 5, dadurch gekennzeichnet, daß eine Dichtbahn über einen Teil oder die ganze Länge des tunnelförmigen Arbeitsraumes ausgelegt und mit der bereits eingebauten mittels einer Doppelnaht verschweißt wird und die Doppelschweißnaht durch Aufblasen überprüft wird.

7. Verfahren nach einem der vorhergehenden Ansprüche, dadurch gekennzeichnet, daß in Fortschreitrichtung vor der Schutzeinrichtung der Erdboden gelöst wird und zumindest ein Teil dieses Materials durch den Arbeitsraum in das Freie abtransportiert wird.

8. Vorrichtung zur Durchführung des Verfahrens nach einem der vorhergehenden Ansprüche, dadurch gekennzeichnet, daß sie mehrere vordere und hintere Schreitausbaueinheiten (10, 20) umfaßt, die jeweils in Fortschreitrichtung (A) hintereinander angeordnet sind und in diesen Schreitausbaueinheiten (10, 20) in deren rückwärtigen Bereich der quer zur Fortschreitrichtung verlaufende, tunnelartige Arbeits- und Transportraum (30) ausgebildet ist, der einen im wesentlichen über die gesamte Breite der Schreitausbaueinheiten (10, 20) verlaufenden Sohlenabschnitt (C) zum Einbau der Bauelemente freiläßt.

9. Vorrichtung nach Anspruch 8, dadurch gekennzeichnet, daß die hintere Schreitausbaueinheit (20) den freien tunnelartigen Arbeits- und Transportraum (30) aufnimmt.

10. Vorrichtung nach Anspruch 8 oder 9, dadurch gekennzeichnet, daß die vorderen Schreitausbaueinheiten (10) Vorrichtungen zum Lösen und Transport von Erdboden-Material in den Arbeitsraum umfassen.

11. Vorrichtung nach einem der Ansprüche 8 bis 10, dadurch gekennzeichnet, daß die hinteren Schreitausbaueinheiten (20) Vorrichtungen zum Verfüllen und Verdichten von Material umfassen.

12. Vorrichtung nach einem der vorhergehenden Ansprüche 8 bis 11, dadurch gekennzeichnet, daß eine Fördereinrichtung (40) vorgesehen ist, mit der Gut von dem zugänglichen Ende (31) des tunnelartigen Arbeitsraums (30) in diesen hinein oder aus diesem heraus transportierbar ist.

## Claims

1. Method for a subsequent installation of structural members on an extensive floor in the earth in underground working, in which a shield is moved stepwise through the earth and the shield forms in the earth an advancing working chamber from which the structural members are installed successively, characterised in that there are used, as the shield, selfadvancing walling units which, on their rear side in the direction of advance, form between two rows of supports extending transversely to the direction of advance and parallel to each other a free, tunnel-like working and transport chamber which extends transversely to the direction of advance essentially over the whole length of the self-advancing walling units and is permanently accessible from at least one end.

2. Method according to claim 1, characterised in that the dimensions of the working and transport chamber allow installation of the structural members by current building methods.

3. Method according to claim 1 or 2, characterised in that an accessible end of the working chamber is located above the earth or in an open trench.

4. Method according to any of the preceding claims, characterised in that an accessible end of the working chamber communicates with a gallery which extends parallel to the direction of advance of the shield and along which the shield moves.

5. Method according to claim 4, characterised in that the gallery is made in the process of advancing and in the region of the shield, preferably from prefabricated elements.

6. Method according to any of claims 1 to 5, characterised in that a sealing web is paid out over a portion or the whole length of the tunnel-like working chamber and welded to the one already installed by means of a double seam and the double weld seam is checked by inflation.

7. Method according to any of the preceding claims, characterised in that in the direction of advance in front of the shield the earth is loosened and at least a portion of this material is transported away through the working chamber into the open.

8. Apparatus for carrying out the method according to any of the preceding claims, characterised in that it includes several front and rear self-advancing walling units (10, 20) which are respectively arranged one behind the other in the direction of advance (A) and in these self-advancing walling units (10, 20) in the rear region thereof is formed the tunnel-like working and transport chamber (30) which extends transversely to the direction of advance and which leaves a floor section (C) essentially extending across the whole width of the self-advancing walling units (10, 20) free for installation of the structural members.

9. Apparatus according to claim 8, characterised in that the rear self-advancing walling unit (20) contains the free, tunnel-like working and transport chamber (30).

10. Apparatus according to claim 8 or 9, characterised in that the front self-advancing walling units (10) include means for loosening and transporting earth material into the working chamber.

11. Apparatus according to any of claims 8 to 10, characterised in that the rear self-advancing walling units (20) include means for puddling and compacting material.

12. Apparatus according to any of the preceding claims 8 to 11, characterised in that a conveyor (40) is provided with which material can be transported from the accessible end (31) of the tunnel-like working chamber (30) into or out of the latter.

## Revendications

1. Procédé de pose, en reprise, d'éléments de construction sur un plancher de grande étendue dans le sol, en construction souterraine, dans lequel un dispositif de protection avance pas à pas à travers le sol et dans lequel le dispositif de protection forme dans le sol un espace de travail qui avance et à partir duquel on pose successivement les éléments de construction, caractérisé par le fait que comme dispositif de protection on emploie des éléments de soutènement marchant, qui, sur leur côté arrière, dans la direction de l'avance, forment, entre deux rangées d'étais disposées transversalement par rapport à la direction de l'avance et parallèlement l'une à l'autre, un espace de travail et de transport en forme de tunnel qui s'étend transversalement par rapport à la direction de l'avance, sensiblement sur toute l'extension longitudinale des éléments du soutènement marchant et qui est accessible en permanence au moins par une extrémité.

2. Procédé selon la revendication 1, caractérisé par le fait que les dimensions de l'espace de travail et de transport autorisent la pose des éléments de construction par un procédé d'un bon rendement.

3. Procédé selon la revendication 1 ou 2, caractérisé par le fait qu'une extrémité accessible de l'espace de travail se trouve au-dessus du terrain ou dans une fosse ouverte.

4. Procédé selon l'une des revendications précédentes, caractérisé par le fait qu'une extrémité accessible de l'espace de travail est en liaison avec une galerie qui est orientée parallèlement à la direction de l'avance du dispositif de protection et le long de laquelle le dispositif de protection se déplace.

5. Procédé selon la revendication 4, caractérisé par le fait que la galerie est fabriquée au cours de l'avance et au voisinage du dispositif de protection, de préférence en éléments préfabriqués.

6. Procédé selon l'une des revendications 1 à 5, caractérisé par le fait que l'on pose une bande d'étanchéité sur une partie ou sur toute la longueur de l'espace de travail en forme de tunnel, qu'on la soude avec celle déjà posée, au moyen d'un double cordon de soudure et que l'on teste le double cordon de soudure par soufflage.

7. Procédé selon l'une des revendications précédentes, caractérisé par le fait que l'on abat le terrain en avant du dispositif de protection, dans le sens de l'avance, et que l'on évacue à l'air libre au moins une partie de ce matériau par l'espace de travail.

8. Dispositif pour l'exécution du procédé selon l'une des revendications précédentes, caractérisé par le fait qu'il comporte plusieurs éléments avant et arrière (10, 20) de soutènement marchant qui sont respectivement disposés l'un derrière l'autre dans la direction de l'avance (A) et par le fait que dans ces éléments de soutènement marchant (10, 20), dans leur zone arrière, est formé l'espace de travail et de transport (30) en forme de tunnel, qui est orienté transversalement par rapport à la direction de l'avance et qui, pour la pose des éléments de construction, libère une portion (C) du plancher qui s'étend sensiblement sur toute la largeur des éléments de soutènement marchant (10, 20).

9. Dispositif selon la revendication 8, caractérisé par le fait que c'est l'élément de soutènement marchant arrière (20) qui dégage l'espace libre, en forme de tunnel, (30) de travail et de transport.

10. Dispositif selon la revendication 8 ou 9, caractérisé par le fait que les éléments avant de soutènement marchant (10) comportent des dispositifs pour abattre et transporter le matériau du terrain dans l'espace de travail.

11. Dispositif selon l'une des revendications 8 à 10, caractérisé par le fait que les éléments arrière du soutènement marchant (20) comportent des dispositifs pour remblayer avec le matériau et le compacter.

12. Dispositif selon l'une des revendications précédentes 8 à 11, caractérisé par le fait qu'il est prévu un appareil de transport (40) avec lequel on peut transporter des produits par l'extrémité accessible (31) de l'espace de travail (30) en forme de tunnel, soit dans cet espace de travail, soit hors de cet espace de travail.

# Fig.1

# Fig.2